# EUROPEAN PATENT SPECIFICATION

(11) **EP 3 618 580 B1**
(45) Date of publication and mention of the grant of the patent: **19.06.2024**
(21) Application number: 18191357.5
(22) Date of filing: 29.08.2018
(51) Int. Cl.: H05B 47/19, H04B 10/116

(54) **TRANSMISSION CODING SCHEME FOR A LIGHTING SYSTEM**
ÜBERTRAGUNGSCODIERUNGSSCHEMA FÜR EIN BELEUCHTUNGSSYSTEM
SCHÉMA DE CODAGE DE TRANSMISSION POUR UN SYSTÈME D'ÉCLAIRAGE

(43) Date of publication of application: 04.03.2020
(73) Proprietor: Tridonic GmbH & Co. KG, 6851 Dornbirn (AT)
(72) Inventor: Kleka, Maciej, 6850 Dornbirn (AT)
(74) Representative: Beder, Jens

(56) References cited:
- WO-A1-2013/126585
- US-A1- 2010 316 389
- US-A1- 2013 195 468
- SCHOUHAMER IMMINK K A: "RUNLENGTH-LIMITED SEQUENCES", PROCEEDINGS OF THE IEEE, IEEE. NEW YORK, US, vol. 78, no. 11, 1 November 1990 (1990-11-01), pages 1745-1759, XP000173280, ISSN: 0018-9219, DOI: 10.1109/5.63306

## Description

The invention is in the field of transmission of identification information in lighting systems. In particular, the invention proposes a method of transmitting device identification information between devices based on use of visible light, a corresponding lighting system, a device for a lighting system, a receiving device such as a mobile wireless device and a program for the receiving device.

Recent building automation systems and in particular lighting systems introduce devices such as lighting driver devices (ballasts) which include a capability to be connected via a bus system or similar communication networks. An example for such standardized bus system is the proprietary standard DALI. Similar lighting systems may use a communication protocol according to the TCP/IP standard for connecting communication interfaces of the individual devices of the lighting system.

In order to install or to reconfigure a lighting system connected via a bus system, and in particular to add a new device, for example a lighting driver device, an actuator, a sensor such as a daylight sensor or a movement detector, the new device has to be assigned a unique network address. This unique network address enables to unambiguously address any device connected via the bus system.

The network address may differ from a unique device identifier assigned during manufacturing of the device or a preset network address assigned as a default value by the manufacturer of the device during the manufacturing process.

Within the present application, the term identification information is uniformly and interchangeably used to denote a network address of device in a communication network or a unique device identifier.

A plurality of different methods for extracting identification information from devices of a lighting system are known.

WO 2013/126585 A1 discloses a system, remote control device and method for communicating with and controlling various devices using visible light communication (VLC). One embodiment provides a method for extending a communication range of a visible light communication system comprising a remote control device and a plurality of controlled devices. Such a method may include, for example, transmitting a communication message from a remote control device to a first controlled device located within range of the remote control device, wherein the communication message is transmitted through free space using visible light. The method extends the communication range of the visible light communication system to a second controlled device, which is located outside of the range of the remote control device, by using the first controlled device to retransmit the communication message through free space using visible light to the second controlled device.

US 2010/316689 A1 discloses a method for transmitting digital data in an optical free-space transmission system in which a binary code sequence produced from the digital data is used to transmit amplitude-modulated light waves across an optical free space between a transmitter and a receiver. According to a first aspect, the binary code sequence is produced such that a modulation frequency of the light waves determined by the binary code sequence has a value of 70 Hertz. According to a second aspect, light waves are modulated with the binary code sequence and binary data are transmitted in blocks during a first time period, and non-modulated light waves are emitted during second time periods, wherein the light intensities of the time periods are selected so that the quantities of light transmitted in two periods correspond to predetermined quantities of light.

US 2013/0195468 A1 discloses a visible light wireless communication receiver that includes a source code recognizing unit that receives a source bit stream and recognizes the source bit stream as source codes of a unit of a first number of bits. The visible light wireless communication receiver further includes a line coding unit that encodes each of the source codes into an encoding code of a unit of a second number of bits, the second number being larger than the first number. In particular, in the encoding code, the number of bits corresponding to 1 is the same as the number of bits corresponding to 0. Therefore, the change in brightness of lighting may be minimized in the visible light wireless communication.

DE 10 2005 028 206 A1 discloses a lighting driver device having a data bus interface. The lighting driver device includes optical and or acoustic signalling means. The signalling means are adapted to reproduce a bus address of the lighting driver device as identification information in encoded formant. In particular, in case of the lighting driver device, the signalling means are arranged in addition to the lighting means controlled by the lighting driver device.

The lighting means can include light emitting diodes (LEDs) of different colors in order to reproduce the identification information in a color-coded optical signal.

Using dedicated commissioning devices is generally well-known in order to acquire the identification information from the individual participating devices of an installed lighting system. However, the commissioning device for use with the lighting system according to DE 10 2005 028 206 A1 requires complex receiving means for obtaining the identification information from plural lighting driver devices during the installation and commissioning process, and like all commissioning devices, its use is restricted to the installation and commissioning process.

At the same time, mobile computing devices such as mobile wireless devices increasingly include cameras providing an improved optical resolution and many of them even the capability to record short video clips. The camera of the mobile computing device offers only a rather low time resolution for recording videos, for example taking sequential image frames of the video with a frame rate of 30 frames per second.

Therefore, the technical problem of improving the commissioning process of lighting systems avoiding the use of specific commissioning devices is to be addressed.

The invention includes as defined in claim 1 a method for transmitting identification information according to a first aspect.

The invention includes as defined in the corresponding independent claims a method for receiving identification information, a lighting system, a device for a lighting system, a program for the device for the lighting system and a driver device for the lighting system.

The dependent claims define further advantageous embodiments of the invention.

According to a first aspect, a method for transmitting identification information to a device in a lighting system, is proposed. The lighting system comprises at least one lighting driver device for driving a lighting module. The method comprises steps of encoding the identification information to generate encoded identification information, switching the driving device into an identification mode and of the lighting module controlled by the lighting driver device emitting modulated light. The modulated light includes an encoded identification information, which is encoded in a binary code format for transmission. The lighting module is configured to emit, driven by the lighting driver device, the modulated light with a bit rate of 5 to 15 bits per second, preferably 10 bits per second. The first number of bits is four bits and the second number of bits is five bits, the encoded identification information is transmitted in at least two sequential code words, and the code format for transmission includes a mapping table with at maximum three sequential bits with a same bit value in a code word, at maximum four sequential bits with the same bit value in two consecutive code words, and at maximum two sequential bits with the same bit value at the start of the code words.

The code format for transmission maps an identification information space with a first number of bits to a transmission code space with a second number of bits, wherein the second number of bits is larger than the first number of bits.

According to a preferred embodiment of the method for transmitting the identification information in a lighting system, the third number of bits is smaller than five.

The inventive method encodes the identification information into binary code format for transmission, which conveys the identification information with a rather low bitrate to the device. Nevertheless, the bit rate is sufficient to transmit the encoded identification information in an acceptable amount of time, for example in less than several seconds. Thus, an entire lighting system comprising a plurality of lighting driver devices can convey its respective plurality of pieces of identification information to the device in acceptable amount of time.

Simultaneously, the specific features of the code format for transmission enable the device to acquire synchronization with the lighting driver device, as the number of bits succeeding to each other and having a same bit value is required to be low. The method ensures that a fluctuating bit pattern of successive "on"-states and "off"-states is provided.

This advantageous effect of the employed code format for transmission is achieved by increasing a first bit number of a word in the address space of the identification information to a larger second bit number of a corresponding word in the transmission code space. By increasing the number of bits of a code word in the address space of the identification information to a higher number of bits of the lengthened code word conveying the same identification information in the transmission code space, it becomes possible to ensure that sufficient fluctuation of the bit pattern of successive "on"-states and "off-states in the transmitted light signal is available.

The significantly low data rate of the code format for transmission also ensure that even a receiving device with a receiving means such as a camera with only limited time resolution is sufficient to obtain the identification information during a commissioning process of the lighting system. Thus, a wide variety of electronic devices including a camera sensor may be used as commissioning devices.

The combination of the specific code format for transmission with the low bit rate for transmission of the binary encoded identification information using light emitted in a visible range of light ensures the advantageous solution of the technical problem.

The prior art cannot solve the problem in a comparative manner, as dedicated light emitting means are provided for communicating the identification information and the code format for transmission explicitly uses light with different colors for encoding the identification information.

The identification information may thus be transmitted by using the lighting module for transmitting the identification information in an identification mode of operation. In a standard mode of operation, the same lighting module provides the required light for fulfilling the primary lighting function in the lighting system. Specific LEDs for transmitting the identification information as signalling means are not necessary.

The specific code format for transmission ensures even in case of successive code words that a clock recovery at a receiving side of the coded transmission according to the invention is possible. A widely known Manchester code providing a similar advantageous clock recovery at the receiving side is however not necessary for present invention, and thus, the bandwidth of the inventive code format for transmission provides an advantageous transmission bandwidth when compared to a bandwidth loss of 50 % when using a Manchester coding scheme. This enables to use a camera sensor at the device with a low time resolution for receiving the modulated light.

The method for transmitting identification information in a lighting system according to an embodiment may further comprise acquiring, at the at least one lighting driver device, a request for switching the lighting driver device into the identification mode.

Distinguishing between controlling a same lighting module in a standard operation mode to emit light with predetermined lighting characteristics for illumination purposes on the one hand and to switch into an identification mode for emitting the identification information by the same lighting module enables to use visible light for communicating the identification information. Although the visible modulated light including the coded identification information has a low switching frequency between successive data symbols, this does not adversely affect the standard operation mode of operation and therefore convenience of a user.

According to a second aspect, an electronic control unit for a device of a lighting system, in particular a lighting driver device is configured to execute the steps according to one of the embodiments of the method for transmitting identification information to a device in a lighting system according to the first aspect.

The electronic control unit can be an integrated circuit, in particular a microprocessor or application specific integrated circuit (ASIC).

A lighting driver device according to a third aspect and comprising the electronic control unit solves the technical problem.

A luminaire, in particular an emergency luminaire, comprising the lighting driver device and the at least one lighting module, in particular comprising the lighting module including at least one LED, provides a solution according to the fourth aspect for the problem.

In particular, emergency luminaires and emergency lighting systems benefit from the inventive method, as commissioning of these emergency lighting systems with a plurality of emergency lighting units distributed over a large building is time consuming and involves a plurality of lighting driver devices.

The fifth aspect of the invention concerns a method for receiving, by a device, identification information emitted by at least one luminaire of a lighting system. The method according to the fifth aspect comprises a camera of the device obtaining a time sequence of images. A control unit of the device processes the obtained time sequence of images to extract identification information from modulated light emitted by the at least one luminaire which is included in the time sequence of images. The identification information is encoded in a binary code format for transmission. The code format for transmission maps an identification information space with a first number of bits to a transmission code space with a second number of bits, wherein the second number of bits is larger than the first number of bits. The first number of bits is four bits and the second number of bits is five bits, the encoded identification information is transmitted in at least two sequential code words, and the binary code format for transmission includes a mapping table with at maximum three sequential bits with a same bit value in a code word, at maximum four sequential bits with the same bit value in two consecutive code words, and at maximum two sequential bits with the same bit value at the start of the code words.

The identification information includes an address of a building automation unit, in particular an address of an addressable lighting interface, for example a DALI address or address according to the TCP/IP standard.

The method significantly improves extracting address information from the lighting driver device. This is of particular advantage for systems connecting a plurality of devices in a communication network requiring individual address information for each of the connected devices, as is the case for building automation systems and in particular for a lighting system including a bus interface at each lighting driver device of the lighting system.

According to a sixth aspect of the invention, a device comprising a camera and a device control unit advantageously solves the problem. The device is configured to perform the steps of the receiving method according to the fifth aspect.

Preferably, the device for receiving an identification information is a mobile wireless device, a mobile handheld computing device, a tablet computer or a commissioning device.

Mobile wireless devices like smartphones, for example, almost always include one or more camera sensors (camera) with continuously improved spatial resolution. Some camera sensors may be adapted to acquire short video clips with a frame rate, which often is 30 frames per second or 50 frames per second. This typical frame rate of the camera sensor provides a low time resolution for the camera sensor and may be deemed to low for a receiving side of an optical communication link in the visible optical range.

The inventive code format for transmission overcomes this problem and enables to use versatile and readily available mobile wireless devices with only an additional software module ("app") to act as a commissioning device.

According to a seventh aspect, a program for a device with a camera and a device control unit which connect to a memory storing program code means solves the problem, when the program executed by the device control unit performs the method according to one embodiment of the method for receiving an identification information according to the fifth aspect.

A lighting system according to the eighth aspect of the invention comprises at least one luminaire according to an aspect of the invention and a device, preferably a mobile device, according to an aspect of the invention.

A preferred embodiment of the invention is explained with reference to the accompanying drawings in which
Fig. 1 shows an overview of a lighting system in form of a simplified block diagram,
Fig. 2 depicts a structure of a data packet of a transmission scheme according to an embodiment,
Fig. 3 shows a mapping table for generating the code format for transmission according to an embodiment, and
Fig. 4 depicts a simplified flow chart for transmission of identification information according to an embodiment.

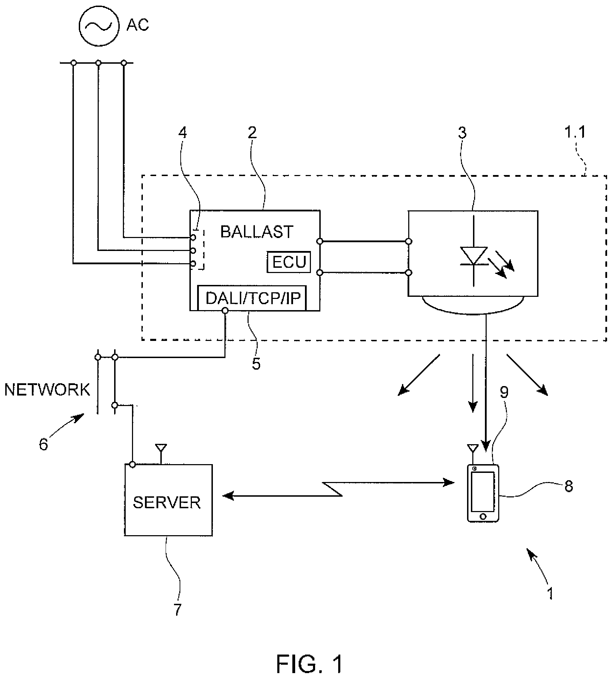

Fig. 1 shows an overview of a lighting system 1 for applying the claimed invention. The lighting system 1 is shown in form of a simplified block diagram.

The lighting system 1 comprises at least one lighting driver device 2 (ballast).

The lighting driver device 2 comprises an electronic control unit ECU for controlling the units of the lighting driver device 2.

The lighting system 1 may be a lighting system for illuminating a building. Additionally or alternatively, the lighting system 1 may be an emergency lighting system.

The electronic control unit ECU in particular controls at least one lighting module 3, which emits light in a visible range of the electromagnetic spectrum.

The lighting module 3 can include one or more light emitting elements, for example light emitting diodes (LEDs). The electronic control unit ECU can modulate light emission, in particular an intensity of the light emitted by the lighting module 3, by varying a load current provided via a load connection of the lighting driver unit 2 to the lighting module 3.

The lighting module 3 and the lighting driver unit 2 may be integrated into a luminaire 1.1 with a single housing assembly.

The lighting driver device 2 further includes a mains interface 4 for connecting the lighting driver device 2 to the AC mains supply and a communication interface 5 for connecting the lighting driver device 2 with a communication network 6.

The communication interface 5 may provide communication according to one or more communication standards, for example communication according to the DALI standard.

Additionally or alternatively, the communication interface 5 may apply a communication protocol such as TCP/IP for example.

Additionally or alternatively, the communication interface 5 may be integrated with the mains interface 4 for a providing a power line communication capability for the lighting system 1.

The communication interface 5 provides communication in the communication network 6 based on a distinctive and unambiguous network address for the communication interface 5. In the discussed embodiment, the network address of the communication interface 5 corresponds to identification information of the lighting driver device 2. This may not necessarily apply for all embodiments of the invention.

The identification information may also be a unique serial number assigned during manufacturing of the lighting driver device 2, for example.

The electronic control unit ECU may switch the lighting driver unit 2 from a standard operation mode to an identification mode. The switching from the standard operation mode to the identification mode may occur in response to a request received via the communication interface 5 over the communication network 6.

Additionally or alternatively, switching from the standard operation mode to the identification mode may occur in response to an input operation, for example an input operation using a switch or pushbutton arranged at the lighting driver device 2. The switch or pushbutton may be arranged externally to the lighting driver device 2, for example integrated with the assembly housing of the luminaire 1.1.

The communication network 6 may further link one or more servers 7 with the lighting driver device 2.

The server 7 provides network management functions for the lighting system 1.

Additionally the server 7 may provide a unidirectional or bidirectional communication capability from / to at least one device 8.

The device 8 of a preferred embodiment is a mobile wireless device, for example a smartphone or mobile tablet computer, with a capability to run application software as one or more apps.

The device 8 comprises a camera sensor 9. The camera sensor 9 is configured to acquire image information and video information.

The camera sensor 9 may for example acquire video information as a time sequence of consecutive image frames with a predetermined frame rate, for example a frame of 30 or 50 frames per second.

The device 8 may further include transmit/receive means (transceiver) providing a communication capability, preferably a wireless communication capability. The transmit/receive means may for example provide a wireless communication capability with the server 7.

The device 8 may further include an input /output means, for example a touch sensitive display for enabling a user to operate the device 8. In particular, a command to switch the lighting driver device 2 into the identification mode may be input via the input /output means and communicated via the transmit/receive means to the server 7.

The server 7 may then control the at least one lighting driver device 2 to switch into the identification operation mode.

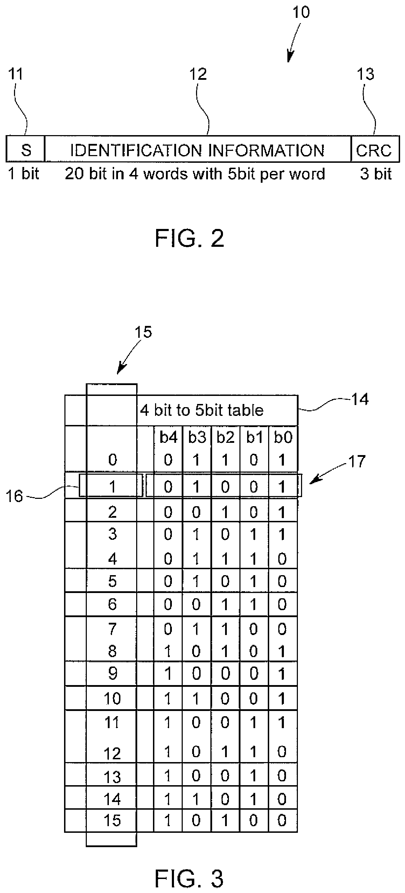

Fig. 2 depicts a structure of a data frame of a transmission scheme according to an embodiment. The data frame is one illustrative example for devising an embodiment and explicitly provided as a non-limiting example for applying the invention.

The exemplary data frame has an overall length of 24 bit. The data frame includes a single start bit (start bit portion), succeeded by a payload portion with a length of 20 bit and a CRC portion (cyclic redundancy check) with a length of 3 bit.

The start bit portion and the CRC portion and their function are well known and used in a conventional manner. With a frame length of 24 bit and a bit rate for transmission of 10 bit per second, a transmission time of 2.4 seconds for the entire frame is achieved.

Taking into consideration, that the camera sensor 9 of a particular mobile wireless device may have a time resolution determined by a frame rate (image frame rate) of typically 30 frame per seconds, the data frame depicted in fig. 2 is well suited to transmit its payload data within a time of a few seconds, for example 3 to 4 seconds, from the lighting driver device 2 to the mobile wireless device.

The inventive code format for transmission is applied in the payload portion of the data frame.

Fig. 3 shows a mapping table 14 for generating the code format for transmission according to an embodiment. The mapping table is a preferred example for mapping an identification information to a bit sequence for transmission and for recovering the transmitted identification information from a received bit sequence.

The mapping table 14 arranges in a first column 15 the possible values for the identification information for a first number of bits in a binary coded form. The depicted embodiment provides 16 values for a first number of bits of a word which is four (4).

A binary coded bit value has either the value "high" corresponding to 1 or the value "low" corresponding to 0.

Second to sixth column of the mapping table 14 each include the corresponding bit values b4, b3, b2, b1 and b0 of the coded identification information in the transmission code space.

For example, a specific identification information 16 with the identification information numeric value "1" in the identification information space has a mapped identification information binary value 17 in the transmission code space of "01001" according to the mapping table 14.

The mapping table 14 unambiguously maps each word with a length of four bits representing a specific identification information value to a corresponding transmission code value with a word length of five bits.

The mapping table 14 enables to generate identification information in the transmission code space.

The encoded identification information can be transmitted in at least two sequential code words. The mapping table 14 thereby ensures that the code format for transmission includes a mapping table with at least one of the following features.

There are at maximum three sequential bits with a same bit value in a single code word.

When taking two consecutive code words in a time sequence of code words into consideration, at maximum four sequential bits with the same bit value may occur. Furthermore, at maximum two sequential bits with the same bit value at the start of a single code word occur.

These features of the mapping table 14 ensure that synchronizing on the transmitted frame in a receiving apparatus is reliably possible, although only a limited number of received logic low and logic high values per frame is available at the receiving side of the transmission. This small number of logic low and logic high values results from the short available number of bits per frame possible due to the limited time resolution offered by the camera sensor 9.

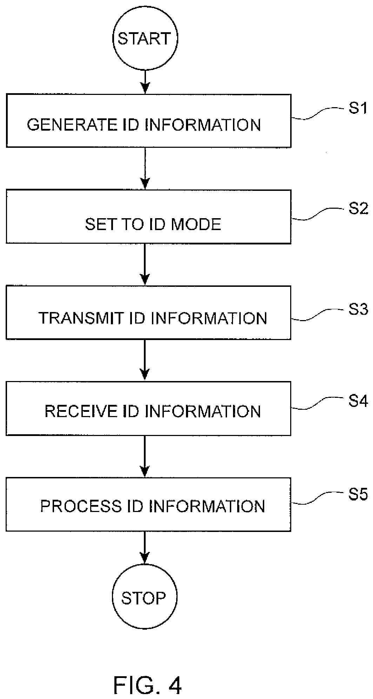

Fig. 4 depicts a simplified flow chart for transmission of an identification information according to an embodiment. The method applies to transmitting identification information to a device 8. The lighting system 1 comprises at least one lighting driver device 2. The lighting module 3 is configured to emit the modulated light with a bit rate of 5 to 15 bits per second, preferably with about 10 bits per second.

In a step S1, identification information is generated and assigned to the lighting driver device 2.

The generated identification information is encoded in a binary code format for transmission. The code format for transmission maps an identification information space with a first number of bits, for example 4 bits, to a transmission code space with a second number of bits, for example 5 bits. Thus, the second number of bits is larger than the first number of bits.

The encoded identification information comprises a sequence of bits, in which each subsequence with a length of a third number of bits includes at least one bit differing in value from the other bits in the subsequence of bits.

In a step S2, the lighting driver device 2 is switched into an identification mode.

In step S3, the binary encoded identification information is transmitted, In particular, the lighting driver device 2 controls the lighting module 3 to emit modulated light. The modulated light includes the encoded identification information generated in step S1.

In step S4, the transmitted identification information is received by the device 8.

In particular in step S4, the camera sensor 9 obtains a time sequence of images. The device 8 processes the obtained time sequence of images to extract identification information from the received modulated light emitted by the at least one luminaire 1.1 resp. the lighting module 3 and included in the time sequence of images.

At least parts of step S4 may be performed offline, for example in the server 7 using information provided by the device 8 to the server via the transmitter/receiver means.

The invention is defined in the appended claims.

## Claims

1. A method for transmitting identification information to a device (8) in a lighting system (1), the lighting system (1) comprising at least one lighting driver device (2), the method comprising steps of encoding the identification information to generate encoded identification information,
switching the lighting driver device (2) into an identification mode,
emitting, by a lighting module (3) controlled by the at least one lighting driver device (2), modulated light, wherein the modulated light includes the encoded identification information,
wherein the identification information is encoded in a binary code format for transmission,
the code format for transmission maps an identification information space with a first number of bits to a transmission code space with a second number of bits, wherein the second number of bits is larger than the first number of bits,
**characterized in that**
the lighting module (3) is configured to emit the modulated light with a bit rate of 5 to 15 bits per second, preferably 10 bits per second,
the first number of bits is four bits and the second number of bits is five bits,
the encoded identification information is transmitted in at least two sequential code words, and
the code format for transmission includes a mapping table with at maximum three sequential bits with a same bit value in a code word, at maximum four sequential bits with the same bit value in two consecutive code words, and at maximum two sequential bits with the same bit value at the start of the code words.

2. The method for transmitting identification information in a lighting system (1) according to claim 1, wherein
the third number of bits is smaller than 5 bits.

3. The method for transmitting identification information in a lighting system (1) according to claim 1 or 2, further comprising
acquiring, by the at least one lighting driver device (2), a request for changing into the identification mode.

4. An electronic control unit for a lighting driver device (2) of a lighting system, wherein, for transmitting identification information to a device (8) in the lighting system (1),
the electronic control unit (ECU) is configured to
encode the identification information to generate encoded identification information,
switch the lighting driver device (2) into an identification mode, and
control a lighting module (3), which emits modulated light, wherein the modulated light includes the encoded identification information, wherein
the identification information is encoded in a binary code format for transmission,
the code format for transmission maps an identification information space with a first number of bits to a transmission code space with a second number of bits, wherein the second number of bits is larger than the first number of bits,
**characterized in that**
the first number of bits is four bits and the second number of bits is five bits,
the encoded identification information is transmitted in at least two sequential code words, and
the binary code format for transmission includes a mapping table with at maximum three sequential bits with a same bit value in a code word, at maximum four sequential bits with the same bit value in two consecutive code words, and at maximum two sequential bits with the same bit value at the start of the code words.

5. The electronic control unit according to claim 4, wherein
the third number of bits is smaller than 5 bits.

6. The electronic unit according to claim 4 or 5, configured to
acquire a request for changing into the identification mode.

7. The electronic control unit according to one of claims 4 to 6, wherein
the electronic control unit (ECU) is an integrated circuit, in particular a microprocessor or ASIC.

8. A lighting driver device, wherein the lighting driver device comprises the electronic control unit (ECU) according to one of claims 4 to 7.

9. A luminaire, in particular emergency luminaire, comprising the lighting driver device (2) according to claim 8 and the at least one lighting module (3), wherein in particular the lighting module (3) includes at least one LED.

10. A method for receiving, by a device (8), identification information emitted by at least one luminaire (1.1) of a lighting system (1), the method comprising
obtaining, by a camera (9) of the device (8), a time sequence of images,
processing the obtained time sequence of images to extract identification information from modulated light emitted by the at least one luminaire (1.1) and included in the time sequence of images,
wherein the identification information is encoded in a binary code format for transmission, and
the code format for transmission maps an identification information space with a first number of bits to a transmission code space with a second number of bits, wherein the second number of bits is larger than the first number of bits,
**characterized in that**
the first number of bits is four bits and the second number of bits is five bits,
the encoded identification information is transmitted in at least two sequential code words, and
the code format for transmission includes a mapping table with at maximum three sequential bits with a same bit value occur in a code word, at maximum four sequential bits with the same bit value are in two consecutive code words, and at maximum two sequential bits with the same bit value are at the start of each code word.

11. The method according to claim 10, wherein
the third number of bits is smaller than five.

12. A device comprising a camera (9) and a device control unit, wherein
the camera (9) is configured to obtain a time sequence of images, and
the device control unit is configured to process the obtained time sequence of images to extract identification information from modulated light emitted by at least one luminaire (1.1) and included in the time sequence of images,
wherein the identification information is encoded in a binary code format for transmission, and
the code format for transmission maps an identification information space with a first number of bits to a transmission code space with a second number of bits, wherein the second number of bits is larger than the first number of bits,
**characterized in that**
the first number of bits is four bits and the second number of bits is five bits,
the encoded identification information is transmitted in at least two sequential code words, and
the code format for transmission includes a mapping table with at maximum three sequential bits with a same bit value occur in a code word, at maximum four sequential bits with the same bit value are in two consecutive code words, and at maximum two sequential bits with the same bit value are at the start of each code word

13. The device according to claim 12, wherein
the device is a mobile wireless device, a mobile handheld computing device, a tablet computer or a commissioning device.

14. A program for a device (8) with a camera (9) and a device control unit connected to a memory, the memory storing program code means, wherein the program when executed by the device control unit performs the method according to claim 10 or 11.

15. A lighting system comprising at least one lighting driver device (2) according to claim 8, the at least one lighting module (3) and a device (8) according to one of claims 12 to 13.

## Patentansprüche

1. Verfahren zum Übertragen von Identifikationsinformationen an eine Vorrichtung (8) in einem Beleuchtungssystem (1), das Beleuchtungssystem (1) umfassend mindestens eine Beleuchtungstreibervorrichtung (2), das Verfahren umfassend Schritte eines Codierens der Identifikationsinformationen, um codierte Identifikationsinformationen zu erzeugen,
Schalten der Beleuchtungstreibervorrichtung (2) in einen Identifikationsmodus,
Aussenden, durch ein Beleuchtungsmodul (3), das durch die mindestens eine Beleuchtungstreibervorrichtung (2) gesteuert wird, von moduliertem Licht, wobei das modulierte Licht die codierten Identifikationsinformationen einschließt,
wobei die Identifikationsinformationen in einem Binärcodeformat für die Übertragung codiert sind,
das Codeformat für die Übertragung einen Identifikationsinformationsraum mit einer ersten Anzahl von Bits auf einen Übertragungscoderaum mit einer zweiten Anzahl von Bits abbildet, wobei die zweite Anzahl von Bits größer ist als die erste Anzahl von Bits,
**dadurch gekennzeichnet, dass**
das Beleuchtungsmodul (3) konfiguriert ist, um das modulierte Licht mit einer Bitrate von 5 bis 15 Bit pro Sekunde, vorzugsweise 10 Bit pro Sekunde, auszusenden,
die erste Anzahl von Bits vier Bits ist und die zweite Anzahl von Bits fünf Bits ist,
die codierten Identifikationsinformationen in mindestens zwei aufeinanderfolgenden Codewörtern übertragen werden, und
das Codeformat für die Übertragung eine Abbildungstabelle mit maximal drei aufeinanderfolgenden Bits mit einem gleichen Bitwert in einem Codewort, maximal vier aufeinanderfolgenden Bits mit dem gleichen Bitwert in zwei aufeinanderfolgenden Codewörtern und maximal zwei aufeinanderfolgenden Bits mit dem gleichem Bitwert an dem Anfang der Codewörter einschließt.

2. Verfahren zum Übertragen von Identifikationsinformationen in einem Beleuchtungssystem (1) nach Anspruch 1, wobei
die dritte Anzahl von Bits kleiner als 5 Bits ist.

3. Verfahren zum Übertragen von Identifikationsinformationen in einem Beleuchtungssystem (1) nach Anspruch 1 oder 2, ferner umfassend
Erfassen, durch die mindestens eine Beleuchtungstreibervorrichtung (2), einer Aufforderung zum Wechseln in den Identifikationsmodus.

4. Elektronische Steuereinheit für eine Beleuchtungstreibervorrichtung (2) eines Beleuchtungssystems, wobei zum Übertragen von Identifikationsinformationen an eine Vorrichtung (8) in dem Beleuchtungssystem (1),
die elektronische Steuereinheit (ECU) konfiguriert ist zum
Codieren der Identifikationsinformationen, um codierte Identifikationsinformationen zu erzeugen,
Schalten der Beleuchtungstreibervorrichtung (2) in einen Identifikationsmodus, und
Steuern eines Beleuchtungsmoduls (3), das moduliertes Licht aussendet, wobei das modulierte Licht die codierten Identifikationsinformationen einschließt, wobei
die Identifikationsinformationen in einem binären Codeformat für die Übertragung codiert sind,
das Codeformat für die Übertragung einen Identifikationsinformationsraum mit einer ersten Anzahl von Bits auf einen Übertragungscoderaum mit einer zweiten Anzahl von Bits abbildet, wobei die zweite Anzahl von Bits größer ist als die erste Anzahl von Bits,
**dadurch gekennzeichnet, dass**
die erste Anzahl von Bits vier Bits ist und die zweite Anzahl von Bits fünf Bits ist,
die codierten Identifikationsinformationen in mindestens zwei aufeinanderfolgenden Codewörtern übertragen werden, und
das Binärcodeformat für die Übertragung eine Abbildungstabelle mit maximal drei aufeinanderfolgenden Bits mit einem gleichen Bitwert in einem Codewort, maximal vier aufeinanderfolgenden Bits mit dem gleichen Bitwert in zwei aufeinanderfolgenden Codewörtern und maximal zwei aufeinanderfolgenden Bits mit dem gleichen Bitwert an dem Anfang der Codewörter einschließt.

5. Elektronische Steuereinheit nach Anspruch 4, wobei
die dritte Anzahl von Bits kleiner als 5 Bits ist.

6. Elektronische Einheit nach Anspruch 4 oder 5, die konfiguriert ist zum
Erfassen einer Anforderung zum Wechseln in den Identifikationsmodus.

7. Elektronische Steuereinheit nach einem der Ansprüche 4 bis 6, wobei
die elektronische Steuereinheit (ECU) eine integrierte Schaltung, insbesondere ein Mikroprozessor oder ASIC, ist.

8. Beleuchtungstreibervorrichtung, wobei die Beleuchtungstreibervorrichtung die elektronische Steuereinheit (ECU) nach einem der Ansprüche 4 bis 7 umfasst.

9. Leuchte, insbesondere Notleuchte, umfassend die Beleuchtungstreibervorrichtung (2) nach Anspruch 8 und das mindestens einen Lichtmodul (3), wobei insbesondere das Lichtmodul (3) mindestens eine LED einschließt.

10. Verfahren zum Empfangen, durch eine Vorrichtung (8), von Identifikationsinformationen, die durch mindestens eine Leuchte (1.1) eines Beleuchtungssystems (1) ausgesendet werden, das Verfahren umfassend
Erhalten, durch eine Kamera (9) der Vorrichtung (8), einer Zeitabfolge von Bildern,
Verarbeiten der erhaltenen Zeitabfolge von Bildern, um Identifikationsinformationen aus moduliertem Licht zu extrahieren, das durch die mindestens eine Leuchte (1.1) ausgesendet wird und in der Zeitabfolge von Bildern eingeschlossen ist,
wobei die Identifikationsinformationen in einem Binärcodeformat für die Übertragung codiert sind, und
das Codeformat für die Übertragung einen Identifikationsinformationsraum mit einer ersten Anzahl von Bits auf einen Übertragungscoderaum mit einer zweiten Anzahl von Bits abbildet, wobei die zweite Anzahl von Bits größer ist als die erste Anzahl von Bits,
**dadurch gekennzeichnet, dass**
die erste Anzahl von Bits vier Bits ist und die zweite Anzahl von Bits fünf Bits ist,
die codierten Identifikationsinformationen in mindestens zwei aufeinanderfolgenden Codewörtern übertragen werden, und
das Codeformat für die Übertragung eine Abbildungstabelle mit maximal drei aufeinanderfolgenden Bits mit einem gleichen Bitwert, die in einem Codewort vorkommen, maximal vier aufeinanderfolgenden Bits mit dem gleichen Bitwert in zwei aufeinanderfolgenden Codewörtern und maximal zwei aufeinanderfolgende Bits mit dem gleichem Bitwert an dem Anfang der Codewörter einschließt.

11. Verfahren nach Anspruch 10, wobei
die dritte Anzahl von Bits kleiner als fünf ist.

12. Vorrichtung, umfassend eine Kamera (9) und eine Vorrichtungssteuereinheit, wobei
die Kamera (9) konfiguriert ist, um eine Zeitabfolge von Bildern zu erhalten, und
die Vorrichtungssteuereinheit konfiguriert ist, um die erhaltene Zeitabfolge von Bildern zu verarbeiten, um Identifikationsinformationen aus moduliertem Licht zu extrahieren, das durch mindestens eine Leuchte (1.1) ausgesendet wird und in der Zeitabfolge von Bildern eingeschlossen ist,
wobei die Identifikationsinformationen in einem Binärcodeformat für die Übertragung codiert sind, und
das Codeformat für die Übertragung einen Identifikationsinformationsraum mit einer ersten Anzahl von Bits auf einen Übertragungscoderaum mit einer zweiten Anzahl von Bits abbildet, wobei die zweite Anzahl von Bits größer ist als die erste Anzahl von Bits,
**dadurch gekennzeichnet, dass**
die erste Anzahl von Bits vier Bits ist und die zweite Anzahl von Bits fünf Bits ist,
die codierten Identifikationsinformationen in mindestens zwei aufeinanderfolgenden Codewörtern übertragen werden, und
das Codeformat für die Übertragung eine Abbildungstabelle mit maximal drei aufeinanderfolgenden Bits mit einem gleichen Bitwert, der in einem Codewort vorkommen, maximal vier aufeinanderfolgenden Bits mit dem gleichen Bitwert in zwei aufeinanderfolgenden Codewörtern und maximal zwei aufeinanderfolgenden Bits mit dem gleichem Bitwert an dem Anfang der Codewörter einschließt.

13. Vorrichtung nach Anspruch 12, wobei
die Vorrichtung eine mobile drahtlose Vorrichtung, eine mobile Handheld-Computervorrichtung, ein Tablet-Computer oder eine Inbetriebnahmevorrichtung ist.

14. Programm für eine Vorrichtung (8) mit einer Kamera (9) und einer Vorrichtungssteuereinheit, die mit einem Speicher verbunden ist, wobei der Speicher Programmcodemittel speichert, wobei das Programm, wenn es durch die Vorrichtungssteuereinheit ausgeführt wird, das Verfahren nach Anspruch 10 oder 11 durchführt.

15. Beleuchtungssystem, umfassend mindestens eine Beleuchtungstreibervorrichtung (2) nach Anspruch 8, das mindestens eine Beleuchtungsmodul (3) und eine Vorrichtung (8) nach einem der Ansprüche 12 bis 13.

## Revendications

1. Procédé de transmission d'informations d'identification à un dispositif (8) dans un système d'éclairage (1), le système d'éclairage (1) comprenant au moins un dispositif de commande de l'éclairage (2), le procédé comprenant des étapes consistant à coder des informations d'identification pour générer des informations d'identification codées,
à faire passer le dispositif de commande de l'éclairage (2) en mode d'identification,
à émettre, par un module d'éclairage (3) commandé par l'au moins un dispositif de commande de l'éclairage (2), une lumière modulée, dans lequel la lumière modulée comprend les informations d'identification codées,
dans lequel les informations d'identification sont codées dans un format de code binaire pour la transmission,
le format de code pour la transmission fait correspondre un espace d'informations d'identification avec un premier nombre de bits à un espace de code de transmission avec un deuxième nombre de bits, dans lequel le deuxième nombre de bits est plus grand que le premier nombre de bits,
**caractérisé en ce que**
le module d'éclairage (3) est configuré pour émettre la lumière modulée à un débit de 5 à 15 bits par seconde, de préférence 10 bits par seconde,
le premier nombre de bits est de quatre bits et le deuxième nombre de bits est de cinq bits,
les informations d'identification codées sont transmises dans au moins deux mots de code séquentiels, et
le format de code pour la transmission comprend une table de correspondance avec au maximum trois bits séquentiels ayant la même valeur de bit dans un mot de code, au maximum quatre bits séquentiels ayant la même valeur de bit dans deux mots de code consécutifs, et au maximum deux bits séquentiels ayant la même valeur de bit au début des mots de code.

2. Procédé de transmission d'informations d'identification dans un système d'éclairage (1) selon la revendication 1, dans lequel
le troisième nombre de bits est inférieur à 5 bits.

3. Procédé de transmission d'informations d'identification dans un système d'éclairage (1) selon la revendication 1 ou 2, comprenant en outre
la réception, de la part de l'au moins un dispositif de commande de l'éclairage (2), d'une demande de passage en mode d'identification.

4. Unité de commande électronique pour un dispositif de commande de l'éclairage (2) d'un système d'éclairage, dans lequel, pour transmettre des informations d'identification à un dispositif (8) dans le système d'éclairage (1),
l'unité de commande électronique (ECU) est configurée pour
coder les informations d'identification pour générer des informations d'identification codées,
faire passer le dispositif de commande de l'éclairage (2) en mode d'identification, et
commander un module d'éclairage (3) qui émet une lumière modulée, dans lequel la lumière modulée comprend les informations d'identification codées, dans lequel
les informations d'identification sont codées dans un format de code binaire pour la transmission,
le format de code pour la transmission fait correspondre un espace d'informations d'identification avec un premier nombre de bits à un espace de code de transmission avec un second nombre de bits, dans lequel le second nombre de bits est plus grand que le premier nombre de bits,
**caractérisée en ce que**
le premier nombre de bits est de quatre bits et le second nombre de bits est de cinq bits,
les informations d'identification codées sont transmises dans au moins deux mots de code séquentiels, et
le format de code binaire pour la transmission comprend une table de correspondance avec au maximum trois bits séquentiels ayant la même valeur de bit dans un mot de code, au maximum quatre bits séquentiels ayant la même valeur de bit dans deux mots de code consécutifs, et au maximum deux bits séquentiels ayant la même valeur de bit au début des mots de code.

5. Unité de commande électronique selon la revendication 4, dans laquelle
le troisième nombre de bits est inférieur à 5 bits.

6. Unité électronique selon la revendication 4 ou 5, configurée pour
recevoir une demande de passage en mode d'identification.

7. Unité de commande électronique selon l'une quelconque des revendications 4 à 6, dans laquelle
l'unité de commande électronique (ECU) est un circuit intégré, en particulier un microprocesseur ou un ASIC.

8. Dispositif de commande d'éclairage, dans lequel le dispositif de commande d'éclairage comprend l'unité de commande électronique (ECU) selon l'une des revendications 4 à 7.

9. Luminaire, en particulier luminaire de secours, comprenant le dispositif de commande d'éclairage (2) selon la revendication 8 et l'au moins un module d'éclairage (3), dans lequel en particulier le module d'éclairage (3) comporte au moins une LED.

10. Procédé de réception, par un dispositif (8), d'informations d'identification émises par au moins un luminaire (1.1) d'un système d'éclairage (1), le procédé comprenant
l'obtention, par une caméra (9) du dispositif (8), d'une séquence temporelle d'images,
le traitement de la séquence temporelle d'images obtenue pour extraire les informations d'identification de la lumière modulée émise par l'au moins un luminaire (1.1) et comprise dans la séquence temporelle d'images,
dans lequel les informations d'identification sont codées dans un format de code binaire pour la transmission, et
le format de code pour la transmission fait correspondre un espace d'informations d'identification avec un premier nombre de bits à un espace de code de transmission avec un deuxième nombre de bits, dans lequel le deuxième nombre de bits est plus grand que le premier nombre de bits,
**caractérisé en ce que**
le premier nombre de bits est de quatre bits et le second nombre de bits est de cinq bits,
les informations d'identification codées sont transmises dans au moins deux mots de code séquentiels, et
le format de code pour la transmission comprend une table de correspondance avec au maximum trois bits séquentiels ayant une même valeur de bit dans un mot de code, au maximum quatre bits séquentiels ayant la même valeur de bit sont dans deux mots de code consécutifs, et au maximum deux bits séquentiels ayant la même valeur de bit sont au début de chaque mot de code.

11. Procédé selon la revendication 10, dans lequel
le troisième nombre de bits est inférieur à cinq.

12. Dispositif comprenant une caméra (9) et une unité de commande du dispositif, dans lequel
la caméra (9) est configurée pour obtenir une séquence temporelle d'images, et
l'unité de commande du dispositif est configurée pour traiter la séquence temporelle d'images obtenue afin d'extraire des informations d'identification de la lumière modulée émise par au moins un luminaire (1.1) et comprise dans la séquence temporelle d'images,
dans lequel les informations d'identification sont codées dans un format de code binaire pour la transmission, et
le format de code pour la transmission fait correspondre un espace d'informations d'identification avec un premier nombre de bits à un espace de code de transmission avec un second nombre de bits, dans lequel le second nombre de bits est plus grand que le premier nombre de bits,
**caractérisé en ce que**
le premier nombre de bits est de quatre bits et le deuxième nombre de bits est de cinq bits,
les informations d'identification codées sont transmises dans au moins deux mots de code séquentiels, et
le format de code pour la transmission comprend une table de correspondance avec au maximum trois bits séquentiels ayant une même valeur de bit dans un mot de code, au maximum quatre bits séquentiels ayant la même valeur de bit sont dans deux mots de code consécutifs, et au maximum deux bits séquentiels ayant la même valeur de bit sont au début de chaque mot de code.

13. Dispositif selon la revendication 12, dans lequel
le dispositif est un appareil mobile sans fil, un appareil informatique portable, un ordinateur tablette ou un appareil de mise en service.

14. Programme pour un appareil (8) ayant une caméra (9) et une unité de commande du dispositif connectée à une mémoire, la mémoire stockant un moyen de code de programme, dans lequel le programme, lorsqu'il est exécuté par l'unité de commande du dispositif, réalise le procédé selon la revendication 10 ou 11.

15. Système d'éclairage comprenant au moins un dispositif de commande d'éclairage (2) selon la revendication 8, l'au moins un module d'éclairage (3) et un dispositif (8) selon l'une des revendications 12 à 13.
